# DEMANDE DE BREVET EUROPEEN

(11) **EP 1 953 695 A1**
(43) Date de publication de la demande: **06.08.2008**
(21) Numéro de dépôt: 08290039.0
(22) Date de dépôt: 17.01.2008
(51) Int. Cl.: G06Q 30/00

(54) **Procédé et système de gestion de coupons**

(30) Priorité: 31.01.2007 FR 0700691
(71) Demandeur: Bouygues Telecom, 92100 Boulogne Billancourt (FR)
(72) Inventeur: Coppolani, Philippe, 78990 Elancourt (FR); Devaux, Charles, 92800 Puteaux (FR)
(74) Mandataire: Bredema

(57) **Abrégé**

La présente invention se rapporte à un procédé et un système de gestion d'au moins un coupon pour un utilisateur muni d'un terminal mobile, le terminal mobile comportant des moyens de collecte, des moyens de communication, et des moyens de mémoire archivant un ensemble de données se rapportant au coupon
caractérisé en ce que ledit procédé comprend :
- une étape de transmission à une borne interactive des données par ledit terminal mobile ;
- une étape d'envoi d'une requête sur la base des données par la borne interactive à un serveur local associé à une base de données ;
- une étape d'édition par la borne interactive d'informations correspondant au traitement d'une réponse reçue à la requête transmise par le serveur local.

## Description

La présente invention se rapporte au domaine de la gestion de coupons.

La présente invention se rapporte plus particulièrement à un système et procédé de gestion d'au moins un coupon sous forme papier ou sous forme électronique à partir d'un terminal mobile.

Dans le cadre de stratégie commerciale, des sociétés ont mis en place des systèmes de couponnage dans l'objectif d'attirer de nouveaux clients ou de fidéliser les anciens. Des mécanismes ont alors été mis en place par ces sociétés, mais elles n'offrent pas à leurs clients d'opportunité de bénéficier de manière optimale des différentes offres de réduction.

On connaît dans l'art antérieur des systèmes proposant des coupons sous forme papier permettant de bénéficier de réductions sur des produits. Ces coupons sont découpés dans des journaux, des magazines, ou peuvent être imprimés à partir de bornes interactives localisées dans des points de vente appartenant à ces sociétés.

L'inconvénient de tels systèmes est d'avoir des clients qui accumulent les différents coupons de réductions et ne peuvent bénéficier des différentes offres de réduction tarifaire qui leurs sont proposées car ces coupons peuvent être perdus ou altérés ou leur date de validité dépassée.

On connaît aussi d'autres systèmes proposant des coupons sous formes numériques, stockés dans une mémoire de carte à puce. Un client possédant cette carte à puce acquiert ces coupons à partir de bornes interactives localisées dans les différents points de ventes de ces sociétés.

Ces systèmes ont pour inconvénient d'obliger le client à se déplacer à un point de vente afin de pouvoir collecter ces différents coupons. De plus il est amené à faire des recherches sur cette borne interactive afin de choisir dans les offres de réductions les coupons qui l'intéressent.

On connaît également dans l'art antérieur le document JP-2105167787 qui décrit un système permettant de collecter des données, se rapportant à des index de produits, comprises dans des vignettes RFID/NFC (Radio Frequency Identification/Near field communication qui peut se traduire par un système de radio identification à partir d'une communication en champ proche) et d'un téléphone mobile appartenant au client et comprenant un lecteur de vignette RFID/NFC. Ces vignettes sont disponibles par exemple dans des journaux ou sur des affiches publicitaires. Ce téléphone mobile possède une unité de mémoire lui permettant de stocker ces données. À partir de son lecteur de vignette RFID/NFC, le téléphone mobile avertit le client par un signal sonore ou vibrant, lors de son passage à un point de vente, de la présence d'un produit référencé dans sa mémoire se trouvant dans son rayon de portée.

Un tel système ne permet pas de déterminer l'emplacement d'un produit compris dans un point de vente qui n'est pas localisé dans le rayon de portée du lecteur de vignettes RFID/NFC du téléphone mobile. De plus, il ne comprend pas de moyens permettant au client de disposer d'informations se rapportant au coupon tel que la disponibilité du produit auquel il est associé au niveau du point de vente ou encore la date de validité du coupon.

La présente invention a pour but de proposer un système et un procédé qui permet au client de pouvoir bénéficier de manière optimale des différentes offres de réduction au travers des informations mises à sa disposition à partir d'un terminal mobile et d'une borne interactive.

La présente invention a également pour but d'être d'une mise en oeuvre facile. En particulier, le système selon l'invention présente l'avantage de pouvoir s'adapter aux infrastructures matérielles existantes.

Pour ce faire, la présente invention concerne un procédé de gestion d'au moins un coupon pour un utilisateur muni d'un terminal mobile, ledit terminal mobile comportant des moyens de collecte, des moyens de communication et des moyens de mémoire archivant un ensemble de données se rapportant audit coupon
caractérisé en ce que ledit procédé comprend :
- une étape de transmission à une borne interactive des données par le terminal mobile ;
- une étape d'envoi d'une requête sur la base des données par la borne interactive à un serveur local associé à une base de données ;
- une étape d'édition par la borne interactive d'informations correspondant au traitement d'une réponse reçue à la requête transmise par le serveur local ;

Ce procédé permet à l'utilisateur de disposer en permanence de ses coupons de réduction compris sur son terminal mobile, de pouvoir les consulter et de pouvoir mettre à jour les informations se rapportant à ces coupons, informations relatives à la disponibilité du produit lié à l'offre de réduction, aux points de vente où il est disponible ou encore la date de validité de l'offre. De cette façon, la gestion des coupons de réduction est simplifiée et permet ainsi à cet utilisateur de bénéficier de manière optimale de toutes les offres commerciales qui l'intéressent.

Avantageusement, il comprend une étape préalable d'interrogation d'un serveur central par le serveur local à partir des données comprises dans la requête de façon à mettre à jour les informations contenues dans la réponse donnée par le serveur local.

Avantageusement l'étape de transmission comprend une sous étape de sélection d'une des informations à partir des moyens d'affichage et de saisie du terminal mobile.

Dans un mode de réalisation, il comprend une étape préalable d'interrogation d'un serveur central par le serveur local à partir des données comprises dans la requête de façon à mettre à jour les informations comprises dans la base de données.

Dans un autre mode de réalisation, il comprend une étape de mise à jour des données comprises dans les moyens de mémoire du terminal mobile par la borne interactive.

Avantageusement l'étape d'édition de données comprend une sous-étape de génération d'au moins un coupon de réduction au format papier par des moyens d'impression.

Dans un mode de réalisation, il comprend une étape d'interrogation à partir de moyens de saisie et d'affichage de la borne interactive de sorte à obtenir des informations sur le coupon.

Avantageusement les informations se rapportent à la disponibilité du produit associé au coupon de réduction

Avantageusement les informations se rapportent à un emplacement dans l'espace du produit.

Avantageusement, l'étape de collecte correspond à un échange de données entre des terminaux mobiles, les données échangées correspondant à au moins un coupon.

La présente invention se rapporte également à un système de gestion d'au moins un coupon comprenant un terminal mobile comportant des moyens de mémoire agencés pour stocker des données relatives au coupon,
caractérisé en ce que le terminal mobile comprend des moyens de communication agencés pour échanger des données avec des moyens de communication d'une borne interactive, la borne interactive comprenant :
- des moyens de connexion agencés pour la transmission de requêtes à un serveur local ;
- des moyens d'édition agencés pour transmettre à l'utilisateur des informations correspondant au traitement d'une réponse reçue à la requête transmise par le serveur local ;

Avantageusement le terminal mobile comprend des moyens d'affichage et de saisie agencés de sorte à permettre à l'utilisateur de sélectionner une information se rapportant au coupon.

Avantageusement, les moyens de communication sont sans fil ou à infra rouge.

Avantageusement, le serveur local comprend des moyens de connexion avec un serveur central agencés pour la mise à jour des informations destinées à la borne interactive.

Avantageusement, le terminal comprend des moyens de communication agencés de façon à échanger des données se rapportant à au moins un coupon avec un autre terminal mobile.

Dans un autre mode de réalisation, la borne interactive peut être associée à un terminal de paiement pour déduire des réductions se rapportant à au moins un coupon sur un montant d'achats effectués par l'utilisateur, calculé par le terminal de paiement.

On comprendra mieux l'invention à l'aide de la description, faite ci-après à titre purement explicatif, d'un mode de réalisation de l'invention, en référence aux dessins annexés dans lesquels :
- la figure 1 illustre le fonctionnement de l'invention ;
- la figure 2 illustre un terminal mobile selon l'invention ;
- la figure 3 illustre une borne interactive selon l'invention ;
- la figure 4 illustre un mode de réalisation selon l'invention.

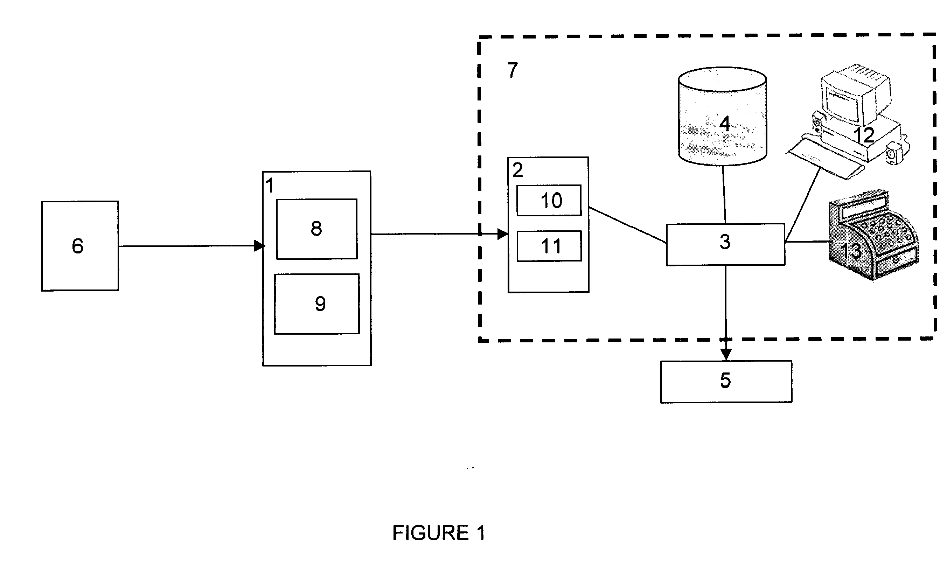

La figure 1 illustre un système comprenant un terminal mobile 1, et un point de vente 7 d'une société commerciale. Ce terminal mobile 1 comprend des moyens de collecte 9,14,15 de données comprises dans des coupons 6. Ces coupons 6, se rapportant à des dispositifs RFID 6 ou à des vignettes 6 à une dimension, ou encore à des vignettes 6 à deux dimensions, correspondent par exemple à des offres commerciales. A partir de moyens de communication 16,17,18,19 ce terminal mobile échange les données se rapportant à au moins un coupon 6 de réduction collectées précédemment, avec une borne interactive 2. Cette borne interactive 2 est reliée à un serveur local 3 qui est associé à au moins une base de données 4 comprenant un ensemble d'informations se rapportant à au moins un produit. Ces informations se rapportent par exemple à un code d'identification d'un produit ou encore à un code d'identification de coupon correspondant à l'offre commerciale dont il fait l'objet, mais aussi à une date de validité de l'offre, à des images et d'autres caractéristiques du produit, et à sa disponibilité concernant le point de vente où est rattachée la borne interactive. Ce serveur local 3 est relié à un serveur central 5 qui regroupe dans des bases de données, auxquelles il est associé, l'ensemble des données provenant des différents points de vente. Ce serveur central 5 peut ainsi renseigner le serveur local 3, et par conséquent la borne interactive 2 qui y est attachée, de la disponibilité d'un produit dans un autre point de vente lorsque par exemple ce produit est épuisé dans le point de vente où est localisé ce serveur local 3. Ce serveur local 3 est aussi relié à un ensemble de terminaux 12 pour la maintenance et l'administration des bases de données et aussi à des terminaux de paiement 13.

Le terminal mobile 1 est un équipement portable qui est équipé d'un écran 8, d'un clavier 9, et qui comporte notamment des moyens de collecte 9,14,15 de données, des moyens de communication 16,17,18,19 pour la réception et l'émission de données. Il permet entre autre à un utilisateur de pouvoir consulter des informations se rapportant aux coupons de réduction.

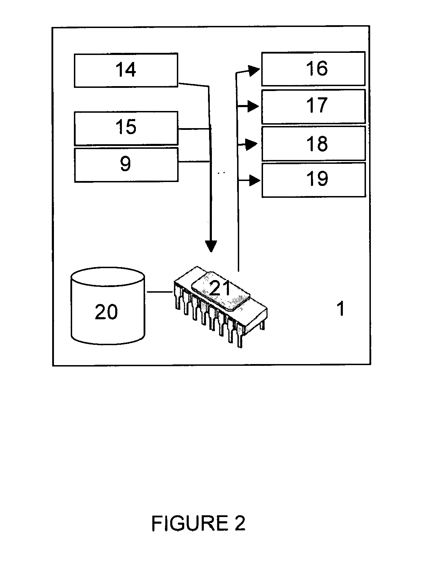

Ce terminal mobile 1 décrit à la figure 2 peut être un téléphone cellulaire, ou un PDA (Personal Digital Assistant qui peut se traduire par ordinateur personnel de poche) ou encore un Smartphone (téléphone mobile associé à un PDA). Les moyens de collecte 9,14,15 de ce terminal mobile 1 mettent en oeuvre une et/ou l'autres des technologies se rapportant à :
- un lecteur NFC/RFID 14 apte à collecter des données enregistrées dans une puce RFID (Radio Frequency Identification pouvant être traduit en français par radio-identification) ;
- un appareil de photographie 15 numérique ou tout type de technologie photographique comprenant un système de capture d'image comme par exemple des capteurs CCD (Charge-Coupled Device qui peut se traduire par détecteur à couplage de charge) ou CMOS (Complementary metal oxide semi-conductor qui peut se traduire semi-conducteur à oxyde de métal) pour collecter des données comprises dans un code barre à une dimension ou encore un code barre à deux dimensions.
- un clavier 9 ou encore un écran tactile permettant de saisir des informations se rapportant au coupon.

Les moyens de communication de ce terminal mobile mettent en oeuvre une ou/et l'autres des technologies suivantes :
- un module Bluetooth 16 permettant d'échanger les données, se rapportant à un coupon, avec un autre périphérique équipé de cette technologie par liaison radio sur une courte distance ;
- un module RFID 17, qui permet de transmettre et de recevoir des données par liaison radio quand il est en présence d'un lecteur RFID appartenant à un autre équipement ;
- un module IrDA (Infrared Data Association) 18 qui permet d'échanger des données par ondes infrarouges à un autre périphérique équipé de cette technologie ;
- un module Wi-Fi (abbreviation de wireless fidelity) 19 qui permet d'échanger des données par liaison radio, avec un autre équipement équipé de la technologie Wi-Fi.

Ce terminal mobile 2 comprend un microprocesseur 21 associé à des moyens de mémoire 20. Ces moyens de mémoire 20 peuvent être volatile ou non volatile ou encore de la mémoire de masse. Ces moyens de mémoire 20 permettent d'enregistrer les données collectées se rapportant à un coupon 6, et agencés avec un microprocesseur 21, d'exécuter différents codes binaires se rapportant à des programmes, pour notamment la gestion des échanges et du stockage des données, et aussi pour le traitement de ces données à partir de différentes procédures.
Ce terminal mobile à partir de ces moyens de communication 16,17,18,19 est apte à échanger des données avec les moyens de communication 22,23,24,25 de la borne interactive 2.

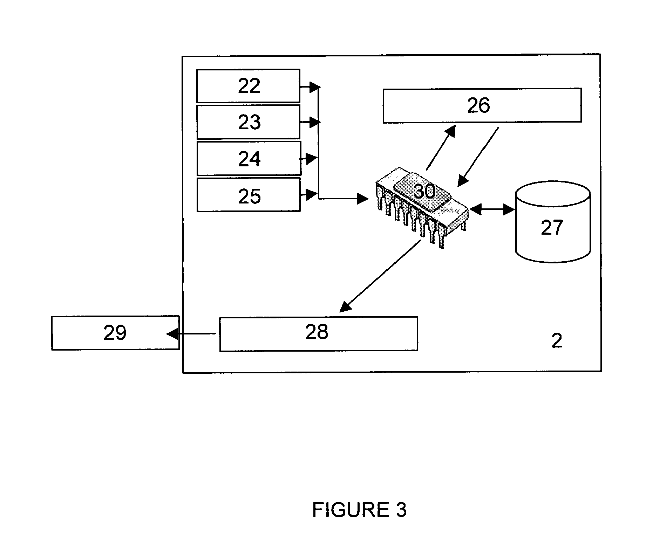

A la figure 3, la borne interactive 2 comprend des moyens de communication 22,23,24,25 qui mettent en oeuvre l'une ou/et l'autres des technologie suivantes :
- un module RFID 23 qui permet de lire un dispositif RFID et d'émettre des données à un lecteur RFID appartenant à un autre équipement ;
- un module Bluetooth 22 pour des échanges de données ;
- un module IrDA 24;
- un module WiFI 25.

Cette borne interactive 2 comprend des moyens de connexion 26 avec le serveur local 3. Ces moyens de connexion 26 peuvent appartenir aux technologies décrites précédemment pour les moyens de communication 22,23,24,25 ou à des communications classiques filaires. Des moyens de mémoire 27 et un microprocesseur 30 permettent d'exécuter des codes binaires se rapportant à des programmes pour l'interprétation des données reçues, pour la gestion des échanges de données avec le terminal mobile 1 et le serveur local 3, pour la transmission d'informations par des moyens d'impression 28 ou/et des moyens d'affichage 10, et pour la gestion d'une interactivité avec l'utilisateur à partir de moyens de saisie 11. Les moyens d'impression 28 permettent notamment l'édition d'un support papier 29 correspondant par exemple à un coupon de réduction, ou comprenant par exemple des informations se rapportant au produit bénéficiant de l'offre comme par exemple son emplacement dans le point de vente, ou l'adresse d'un autre point de vente où ce produit est disponible. Ces informations se rapportant au produit sont aussi éditées sur les moyens d'affichage 10.

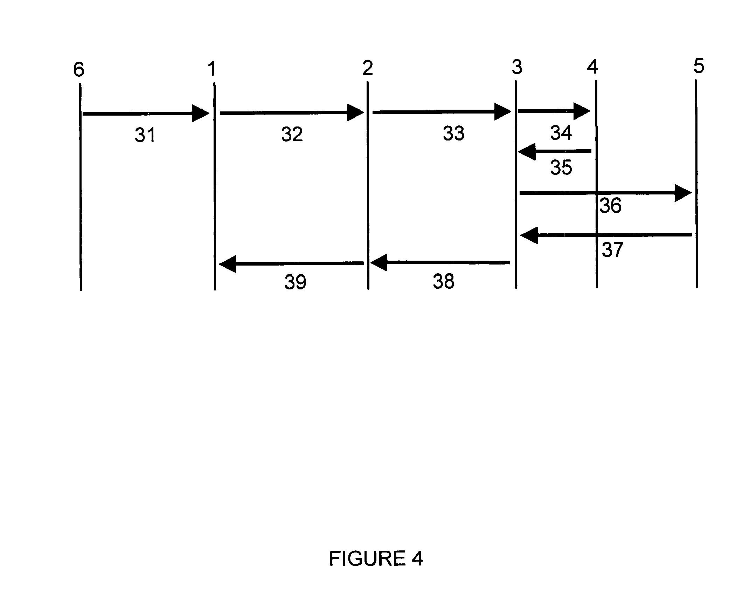

A la figure 4, lors d'une étape de collecte 31 le terminal mobile 1 recueille les données comprises dans des coupons de réduction 6 lors d'une étape 31 de collecte. Ces coupons 6 correspondent à des dispositifs RFID ou encore à des vignettes qui peuvent être à une dimension ou à deux dimensions. Ces données peuvent être collectées à partir de tout type de support compatible avec les moyens de collecte 9,14,15 de ce terminal mobile 1. Ces dispositifs RFID et ces vignettes correspondent à des coupons 6 de réductions qui peuvent figurer dans des journaux, dans des affiches publicitaires et dans tout autre support pouvant comprendre ces dispositifs RFID et ces vignettes.

On peut noter qu'un code de coupon correspondant à un coupon de réduction relatif à un produit peut être saisi à partir du clavier 9 du terminal mobile 1. Par la suite sur la base de ce code de coupon, les informations se rapportant à ce coupon pourront être mises à jour à partir d'une borne interactive.

D'autre part un premier utilisateur de terminal mobile 1 peut collecter des coupons de réduction, par l'échange, le transfert ou la réception de coupons d'un deuxième utilisateur de terminal mobile. Le premier utilisateur peut choisir sur son terminal mobile 1 le ou les coupons 6 de réduction qu'il souhaite échanger en parcourant à partir du clavier 9 ou de l'écran tactile du terminal mobile les informations se rapportant au coupon 6 de réduction. Ces informations correspondent à l'image du produit, la date de validité, la réduction tarifaire ou le type d'offre pratiqué sur le produit. Une fois son choix effectué le premier utilisateur peut procéder au transfert de données se rapportant à au moins un coupon, vers le terminal mobile du second utilisateur. Dans une autre configuration ce premier utilisateur peut avoir accès aux données partagées se rapportant aux coupons de réduction du terminal mobile du second utilisateur, et effectuer son choix de la même manière afin de pouvoir procéder par la suite au téléchargement des coupons 6 choisis dans les moyens de mémoire 20 de son terminal mobile 1. Ces échanges se font à partir des moyens de communication 16,17,18,19 du terminal mobile 1 se rapportant par exemple aux technologies Bluetooth 16, IrDA 18, RFID 17 ou encore WiFI 19.

Les données collectées font l'objet d'un traitement afin que différentes informations soient extraites.

Ces informations se rapportent aux caractéristiques ci-dessous:
- le code du produit faisant l'objet de l'offre commerciale ;
- la date de validité du coupon,
- le code de l'offre commerciale,
- code du coupon,
- une image du produit,
- un texte descriptif portant sur les caractéristiques du produit,
- un texte descriptif portant sur les caractéristiques du coupon,
- catégorie de produit.

On peut toutefois noter, qu'un coupon 6 peut ne comporter que le code de coupon comme unique donnée. Les informations supplémentaires se rapportant à ce coupon pourront être mise à jour à partir de la borne interactive 2.

Les données stockées se rapportant aux coupons sont archivées selon ces caractéristiques. L'utilisateur lors de la consultation de coupons enregistrés sur son terminal mobile 1 peut rechercher des coupons sur la base de critères se rapportant à la date d'expiration de validité ou encore à la catégorie de produit.

Il a par ailleurs la possibilité de paramétrer un signal l'avertissant de la proximité de la date d'expiration relative à la validité de son coupon 6.

Dans chaque point de vente 7 est localisée au moins une borne interactive 2. Lors d'une étape de connexion, le terminal mobile se connecte à une des bornes interactives du point de vente 7. Cette connexion est complètement transparente pour l'utilisateur car il n'a pas de paramétrage à effectuer. Cette connexion peut être initiée par le terminal mobile 1 après que la borne interactive 2 ait été détectée par les moyens de communication 16,17,18,19 du terminal mobile 1. Cette connexion peut aussi être initiée par la borne interactive 2.

La connexion établie, lors d'une étape 32 d'échange de données, un protocole est utilisé pour le transfert de données se rapportant à au moins un coupon 6 du terminal mobile 1 vers la borne interactive 2. L'utilisateur a la possibilité de choisir l'information qu'il souhaite transférer à la borne interactive 2. Il peut en effet choisir en fonction de ses besoins le code du produit faisant l'objet de l'offre commerciale, le code de l'offre commerciale, le code du coupon, ou encore la catégorie du produit.

En choisissant par exemple le code du produit, il obtiendra l'ensemble des offres commerciales se rapportant à ce code produit. En effet plusieurs coupons de réduction proposant des offres différentes peuvent exister pour un même produit. En transférant le code coupon, l'utilisateur aura à sa disposition sur les moyens d'affichage 10 de la borne interactive 2 toutes les informations se rapportant à son coupon de réduction, tel que :
- le code du produit faisant l'objet de l'offre commerciale ;
- la date de validité du coupon,
- le code de l'offre commerciale,
- code du coupon,
- une image du produit,
- un texte descriptif portant sur les caractéristiques du produit,
- un texte descriptif portant sur les caractéristiques du coupon,
- catégorie de produit.
- disponibilité du produit dans le point de vente,
- emplacement du produit dans le point de vente,
- disponibilité du produit dans un autre point de vente le plus proche, si le produit est épuisé.

En choisissant le critère se rapportant au code de l'offre commerciale, il obtiendra tous les coupons faisant partie du même type d'offre commerciale sur tous les produits de ce point de vente.

En choisissant le critère se rapportant à la catégorie du produit, la borne interactive affichera tous les coupons de réductions se rapportant à cette catégorie de produit.

L'utilisateur peut aussi combiner ces informations. Pour une combinaison du code de l'offre commerciale avec une catégorie de produit, les moyens d'affichage 10 de la borne interactive 2 présenteront des coupons de réductions pour tous les produits de même catégorie bénéficiant d'une offre tarifaire appartenant au code de l'offre commerciale choisit.

Lorsque l'utilisateur choisit une information (au moins un code) à partir de son terminal mobile 1 celle-ci est transférée à la borne interactive 2 sous la forme de données. La borne interactive 2 construit une requête sur la base de ces données. Cette requête est ensuite transmise, lors d'une étape 33 d'interrogation à un serveur local 3. Ce serveur local 3 est relié à au moins une base de données 4 et à d'autres terminaux. Ces terminaux se rapportent notamment à des terminaux de paiement 13. La base de données 4 comprend différentes tables numériques comportant des données relatives à tous les produits en vente dans le point de vente 7. Ces tables numériques sont mises en concordance avec d'autres tables numériques se rapportant aux offres commerciales. Ce serveur local 3 transmet la requête, lors d'une étape 34 de transmission à la base de données. Cette base de données résout la requête et envoie une réponse au serveur local 3 lors d'une étape 35. Le serveur local 3 analyse cette réponse et construit une requête qu'il transmet à un serveur central 5 lors d'une étape 36. Cette étape 36 est facultative. La réponse à cette requête, envoyée par le serveur central 5 au serveur local 3, lors d'une étape 37, comprend des données susceptibles de mettre à jour les données reçues de la base de données. Le serveur local 3 construit une réponse à partir de l'ensemble des données qu'il a reçues de la base de données 4 et du serveur central 5. Cette réponse est ensuite transmise à la borne interactive 2 lors d'une étape 38.

Une fois les données reçues la borne interactive 2 interprète ces données et affiche sur un écran 10 les informations auxquelles elles se rapportent. L'utilisateur a la possibilité d'interagir avec les moyens de saisie 11 de la borne interactive 2. Il peut par exemple naviguer à partir d'un menu contextuel au travers des informations reçues, afin d'avoir plus d'information sur un produit, ou une offre de réduction.

L'utilisateur peut imprimer des coupons pour ensuite les utiliser lors du paiement de ses achats. Lors d'une étape 39 de mise à jour de son terminal mobile il peut télécharger de nouveaux coupons et peut aussi mettre à jour les informations se rapportant aux coupons de réduction déjà présents dans son terminal mobile 1.

Selon un mode de réalisation, la borne interactive 2 peut être associée à un terminal de paiement en transmettant au travers de moyens de communication 22,23,24,25, ou à partir de sa liaison au serveur local 3, des données transmises préalablement par le terminal mobile 1 se rapportant aux coupons de réduction devant être appliqués au montant des achats.

Le terminal de paiement 13 peut aussi comprendre un module comportant des moyens de communication se rapportant aux technologies Bluetooth, Wi-Fi, IrDA, ou encore RFID/NFC. Ce module est capable d'échanger des données se rapportant à au moins un coupon. Lors du scannage des produits par les moyens de lecture du terminal de paiement, le terminal mobile 1 se connecte au module. Les données se rapportant aux coupons que l'utilisateur souhaite voir utilisées lors de l'acte d'achat sont transférées vers ce module et stockées dans des moyens de mémoire du terminal de paiement 13. Les coupons 6 de réduction sont automatiquement appliqués au montant des produits correspondant. Ensuite les données enregistrées dans les moyens de mémoire du terminale mobile 1 sont mises à jour. Cette mise à jour peut correspondre à une suppression de coupons à usage unique.

L'invention est décrite dans ce qui précède à titre d'exemple. Il est entendu que l'homme du métier est à même de réaliser différentes variantes de l'invention sans pour autant sortir du cadre du brevet.

## Revendications

1. Procédé de gestion d'au moins un coupon pour un utilisateur muni d'un terminal mobile (1), ledit terminal mobile (1) comportant des moyens de collecte (9,14,15), des moyens de communication (16,17,18,19), et des moyens de mémoire (20) archivant un ensemble de données se rapportant audit coupon
**caractérisé en ce que** ledit procédé comprend :
- une étape de collecte desdites données par lesdits moyens de collecte (9,14,15), dudit terminal mobile comprises dans un terminal et/ou une borne et/ou une vignette ;
- une étape de transmission à une borne interactive (2) desdites données par ledit terminal mobile (1) ;
- une étape d'envoi d'une requête sur la base desdites données par ladite borne interactive (2) à un serveur local (3) associé à une base de données (4); et
- une étape d'édition par ladite borne interactive (2) d'informations correspondant au traitement d'une réponse reçue à ladite requête transmise par ledit serveur local (3).

2. Procédé selon la revendication 1 comprenant une étape préalable d'interrogation d'un serveur central (5) par ledit serveur local (3) à partir desdites données comprises dans ladite requête de façon à mettre à jour les informations contenues dans ladite réponse reçue par ledit serveur local (4).

3. Procédé selon l'une quelconque des revendications précédentes dans lequel ladite étape de transmission comprend une sous étape de sélection d'une desdites informations à partir des moyens d'affichage et de saisie dudit terminal mobile (1).

4. Procédé selon l'une quelconque des revendications précédentes, comprenant une étape de mise à jour des données comprises dans les moyens de mémoire (20) dudit terminal mobile
(1) par ladite borne interactive (2).

5. Procédé selon l'une quelconque des revendications précédentes, dans lequel ladite étape d'édition de données comprend une sous étape de génération d'au moins un coupon de réduction au format papier par des moyens d'impression (28).

6. Procédé selon l'une quelconque des revendications précédentes, comprenant une étape d'interrogation à partir de moyens de saisie et d'affichage de ladite borne interactive de sorte à obtenir des informations sur ledit coupon.

7. Procédé selon l'une quelconque des revendications précédentes, dans lequel lesdites informations se rapportent à la disponibilité du produit associé audit coupon de réduction.

8. Procédé selon l'une quelconque des revendications précédentes, dans lequel lesdites informations se rapportent à un emplacement dans l'espace dudit produit.

9. Procédé selon l'une quelconque des revendications précédentes dans lequel ladite étape de collecte correspond à un échange de données entre des terminaux mobile, lesdites données échangées correspondant à au moins un coupon.

10. Système de gestion d'au moins un coupon comprenant un terminal mobile (1), ledit terminal mobile (1) comportant des moyens de mémoire (20) agencés pour stocker des données relatives audit coupon (6),
**caractérisé en ce que** ledit terminal mobile(1) comprend des moyens de communication (16,17,18,19) agencés pour échanger des données avec des moyens de communication (22,23,24,25) d'une borne interactive (2), ladite borne interactive (2) comprenant :
- des moyens de connexion(26) agencés pour la transmission de requêtes à un serveur local (3) ;
- des moyens d'édition (28,10) agencés pour transmettre audit utilisateur des informations correspondant au traitement d'une réponse reçue à ladite requête transmise par ledit serveur local (3).

11. Système selon la revendication précédente dans lequel ledit terminal mobile (1) comprend des moyens d'affichage et de saisie agencés de sorte à permettre audit utilisateur de sélectionner une information se rapportant audit coupon.

12. Système selon l'une quelconque des revendications 10 et 11, dans lequel lesdits moyens de communication (16,17,18,19) sont sans fil ou à infra rouge.

13. Système selon l'une quelconque des revendications 10 à 12, dans lequel ledit serveur local (3) comprend des moyens de connexion (26) avec un serveur central (5) agencés pour la mise à jour des informations destinées à ladite borne interactive (2).

14. Système selon l'une quelconque des revendications 10 à 13, dans lequel ledit terminal mobile comprend de moyens de communication (16,17,18,19) agencés de façon à échanger des données se rapportant à au moins un coupon (6) avec un autre terminal mobile.

15. Système selon l'une quelconque des revendications 10 à 14, dans lequel ladite borne interactive (2) peut être associée à un terminal de paiement (13), pour déduire des réductions se rapportant à au moins un coupon sur un montant d'achats effectués par ledit utilisateur, ledit montant étant calculé par ledit terminal de paiement (13).

## Revendications modifiées

### Revendications modifiées conformément à la règle 137(2) CBE.

**1.** Procédé de gestion de coupons pour un utilisateur muni d'un terminal mobile (1), ledit terminal mobile (1) comportant des moyens de collecte (9,14,15), des moyens de communication (16,17,18,19), et des moyens de mémoire (20),
**caractérisé en ce que** ledit procédé comprend les étapes suivantes :
- collecte de données comprises dans un terminal, une borne et un coupon, lesdites données étant relatives à des informations se rapportant à au moins un coupon ;
- connexion automatique dudit terminal mobile à ladite borne ;
- sélection d'au moins une desdites informations ;
- transmission à une borne interactive (2) d'au moins une desdites informations par ledit terminal mobile (1) ;
- envoi d'une requête sur la base d'au moins une desdites informations par ladite borne interactive (2) à un serveur local (3) associé à une base de données (4); et
- édition par ladite borne interactive (2) d'informations correspondant au traitement d'une réponse reçue à ladite requête transmise par ledit serveur local (3).

**2.** Procédé selon la revendication 1 comprenant une étape préalable d'interrogation d'un serveur central (5) par ledit serveur local (3) à partir desdites données comprises dans ladite requête de façon à mettre à jour les informations contenues dans ladite réponse reçue par ledit serveur local (4).

**3.** Procédé selon l'une quelconque des revendications précédentes dans lequel ladite étape de transmission comprend une sous étape de sélection d'une desdites informations à partir des moyens d'affichage et de saisie dudit terminal mobile (1).

**4.** Procédé selon l'une quelconque des revendications précédentes, comprenant une étape de mise à jour des données comprises dans les moyens de mémoire (20) dudit terminal mobile (1) par ladite borne interactive (2).

**5.** Procédé selon l'une quelconque des revendications précédentes, dans lequel ladite étape d'édition de données comprend une sous étape de génération d'au moins un coupon de réduction au format papier par des moyens d'impression (28).

**6.** Procédé selon l'une quelconque des revendications précédentes, comprenant une étape d'interrogation à partir de moyens de saisie et d'affichage de ladite borne interactive de sorte à obtenir des informations sur ledit coupon.

**7.** Procédé selon la revendication 6, dans lequel lesdites informations se rapportent à la disponibilité du produit associé audit coupon de réduction.

**8.** Procédé selon l'une quelconque des revendications 6 ou 7, dans lequel lesdites informations se rapportent à un emplacement dans l'espace dudit produit.

**9.** Procédé selon l'une quelconque des revendications précédentes dans lequel ladite étape de collecte correspond à un échange de données entre des terminaux mobile, lesdites données échangées correspondant à au moins un coupon.

**10.** Système de gestion de coupons comprenant un terminal mobile (1), ledit terminal mobile (1) comportant des moyens de mémoire (20) agencés pour stocker des données relatives audit coupon (6),
**caractérisé en ce que** ledit terminal mobile(1) comprend :
- des moyens de collecte aptes à recueillir des données stockées dans un terminal, une borne et un coupon, lesdites données étant relatives à des informations se rapportant à au moins un coupon ;
- des moyens de saisie et d'affichage permettant à l'utilisateur d'effectuer une sélection d'au moins une desdites informations;
- des moyens de communication (16,17,18,19) permettant d'établir une connexion automatique avec une borne interactive (2), et d'échanger des données avec cette borne;
ladite borne interactive (2) comprenant :
- des moyens de connexion(26) agencés pour la transmission de requêtes à un serveur local (3) ;
- des moyens d'édition (28,10) agencés pour transmettre audit utilisateur des informations correspondant au traitement d'une réponse reçue à ladite requête transmise par ledit serveur local (3).

**11.** Système selon la revendication précédente dans lequel ledit terminal mobile (1) comprend des moyens d'affichage et de saisie agencés de sorte à permettre audit utilisateur de sélectionner une information se rapportant audit coupon.

**12.** Système selon l'une quelconque des revendications 10 et 11, dans lequel lesdits moyens de communication (16,17,18,19) sont sans fil ou à infra rouge.

**13.** Système selon l'une quelconque des revendications 10 à 12, dans lequel ledit serveur local (3) comprend des moyens de connexion (26) avec un serveur central (5) agencés pour la mise à jour des informations destinées à ladite borne interactive (2).

**14.** Système selon l'une quelconque des revendications 10 à 13, dans lequel ledit terminal mobile comprend de moyens de communication (16,17,18,19) agencés de façon à échanger des données se rapportant à au moins un coupon (6) avec un autre terminal mobile.

**15.** Système selon l'une quelconque des revendications 10 à 14, dans lequel ladite borne interactive (2) peut être associée à un terminal de paiement (13), pour déduire des réductions se rapportant à au moins un coupon sur un montant d'achats effectués par ledit utilisateur, ledit montant étant calculé par ledit terminal de paiement (13).
